# EUROPÄISCHE PATENTANMELDUNG

(11) **EP 3 376 157 A1**
(43) Veröffentlichungstag der Anmeldung: **19.09.2018**
(21) Anmeldenummer: 17161596.6
(22) Anmeldetag: 17.03.2017
(51) Int. Cl.: G01B 11/24, G06T 15/04

(54) **VERFAHREN ZUM FARBIGEN TEXTURIEREN VON OBERFLÄCHENGEOMETRIEN**

(71) Anmelder: a.tron3d GmbH, 9020 Klagenfurt am Wörthersee (AT)
(72) Erfinder: JESENKO, Juergen, 9587 Riegersdorf (AT)
(74) Vertreter: Beer & Partner Patentanwälte KG

(57) **Zusammenfassung**

Verfahren zum farbigen Texturieren von optisch erfassten, dreidimensionalen Oberflächengeometrien, dadurch gekennzeichnet,
- dass zunächst eine Oberflächengeometrie zur Verfügung gestellt wird,
- dass eine Texturkarte der Oberflächengeometrie erzeugt wird,
- dass die Oberfläche, welche beim Erzeugen der zur Verfügung gestellten Oberflächengeometrie erfasst wurde, wenigstens bereichsweise mit einer 2D-Farbkamera aufgenommen wird, wobei 2D-Farbaufnahmen erzeugt werden,
- dass die mit der 2D-Farbkamera aufgenommenen 2D-Farbaufnahmen in Relation zur Texturkarte gesetzt werden,
- und dass die Texturkarte zusammen mit den 2D-Farbaufnahmen zu einer wenigstens bereichsweise farbig texturierten Oberflächengeometrie zusammengefügt werden.

## Beschreibung

Die Erfindung betrifft ein Verfahren zum farbigen Texturieren von optisch erfassten, dreidimensionalen Oberflächengeometrien.

Es ist bekannt, zum digitalen Erfassen von Oberflächenstrukturen optische Mittel einzusetzen. Die beiden gängigsten Methoden basieren dabei entweder auf stereometrischer Vermessung, bei welcher - vergleichbar mit dem menschlichen Sehen - die Unterschiede zwischen üblicherweise simultan aufgenommenen Bildern (mit bekanntem räumlichem Kameraverhältnis) ermittelt werden, oder auf der Vermessung der Verzerrung eines bekannten Musters, welches auf die zu vermessende Oberfläche projiziert wird. Beide Methoden haben inzwischen einen hohen Grad an Präzision erreicht, was sowohl durch verbesserte Kamera-Sensoren als auch durch verbesserte Rechenleistung beim Analysieren der optisch erfassten Daten, sowie verbesserte Methoden im Allgemeinen möglich wurde. Die Genauigkeit der Vermessung hatte, insbesondere bei der Anwendung von 3D-Scannern in technischen und medizinischen Bereichen, wie beispielsweise dem Erfassen von intraoralen Strukturen und der Fertigung von dentalen Implantaten, Kronen und dergleichen, in der Entwicklung beider Methoden bisher Vorrang. Allerdings hat es sich gezeigt, dass in der täglichen Anwendung weitere Funktionen und Verbesserungen gewünscht sind. Eine der gewünschten Verbesserungen ist das 3D-Scannen in Farbe, bei dem nicht nur die geometrische Oberflächenstruktur, sondern auch die Oberflächentextur bzw. -farbe erfasst wird.

Hierzu gibt es im Stand der Technik verschiedene Ansätze, die aber alle mit Nachteilen verbunden sind. Ein Ansatz sieht vor, den Scan mit Farbkameras durchzuführen. Dies hat aber einen starken, negativen Einfluss auf die Scangenauigkeit, da bei den Sensoren in einer Farbkamera wenigstens drei (bspw. Rot, Grün und Blau) oder vier (bspw. Rot, Grün, Blau und Hell-Dunkel oder auch Cyan, Gelb, Grün und Magenta) Sensorarrays ineinander bzw. nebeneinander angeordnet sein müssen, was die Schärfe aufgrund des erforderlichen Demosaicking stark beeinträchtig. Bei Systemen, die mit dem Erkennen von Verzerrungen eines projizierten Musters arbeiten, kommt hinzu, dass einzelne Aufnahmen, beispielsweise jedes fünfte Bild, für das Erkennen der Texturen bei voller Ausleuchtung erfolgen müssen. Auch dabei gehen weitere Daten verloren, was die mögliche Genauigkeit der erfassten Oberflächenstruktur weiter einschränkt.

Um diese Nachteile zu überwinden, wurde im Stand der Technik versucht, die Scanner mit einer zusätzlichen Kamera auszustatten, welche parallel zu der bzw. den für die Oberflächenerfassung verwendeten Kamera(s) arbeitet. Dabei können die Farbbilder auch einfach, beispielsweise mittels eines Zeitstempels an den Oberflächenstrukturmessungen und den Farbbildern, zugeordnet und in die dreidimensionalen Aufnahmen integriert werden. Eine weitere Kamera im Scanner hat aber wiederum eigene Nachteile. So können die Scanner, bzw. Handstücke von Scannern, aufgrund des zusätzlichen Bauteils nicht mehr so klein ausgeführt werden. Dies ist vor allem bei Scannern, bei denen der Platzbedarf eine Rolle spielt, essentiell. So sind beispielsweise bei einem Intraoral-Scanner die Außenmaße des Scannerkopfes ein entscheidender Faktor für den Komfort des Patienten, dessen Mundinnenraum vermessen werden soll.

Ein weiterer Nachteil bei der Verwendung einer zusätzlichen Kamera im Scanner bzw. in dessen Handstück ist der zusätzliche Energieverbrauch beim Betrieb der Kamera. Dieser kann bei großen Scannern vernachlässigt werden. Scanner, die jedoch beispielsweise lediglich mit einem USB-Kabel an einen Computer angeschlossen oder mit Batterie betrieben werden, haben nur eine geringe Stromstärke bzw. eine begrenzte Energiekapazität zur Verfügung, und können daher auch nur eine begrenzte Anzahl an elektrischen bzw. elektronischen Bauelementen im Scanner betreiben.

Aufgabe der Erfindung ist es daher, eine Möglichkeit, insbesondere ein System, zum farbigen Texturieren von digital erfassten dreidimensionalen Oberflächengeometrien zur Verfügung zu stellen, das die oben genannten Nachteile überwindet.

Gelöst wird diese Aufgabe durch ein Verfahren mit den Merkmalen des Anspruchs 1.

Da der Vorgang der Erfassung der dreidimensionalen Oberflächengeometrie der zu erfassenden Objekte einerseits und der Aufnahme der Farbe andererseits voneinander getrennt ausgeführt wird, besteht der wesentlichste Vorteil in der möglichen physischen Trennung der Kamera(s) für die Farbaufnahme und für die Erfassung der Oberflächengeometrie. Dabei werden nicht nur die oben genannten Nachteile überwunden, sondern auch eigene Vorteile geschaffen. So kann beispielsweise ein bestehendes, monochrom arbeitendes System durch ein Farbmodul nachgerüstet werden, ohne dass ein komplett neues System erworben werden muss, was für den Anwender wirtschaftlich vorteilhaft ist.

Zunächst kann die Oberflächengeometrie mit einem herkömmlichen (monochromen) System, wie es aus dem Stand der Technik bekannt ist, erfasst werden. Dann folgt das eigentliche Texturieren, das heißt das Zuweisen einer Farbe mittels einer Textur bzw. einer Texturkarte.

Dazu wird die bereits erfasste Oberfläche zur weiteren Verarbeitung zur Verfügung gestellt. Besonders geeignet sind dabei Notationen, die auf Dreiecksfacetten basieren.
Da es für das Übertragen bzw. Abspeichern von Dreiecksfacetten mehrere verbreitete Formate gibt, ist darauf zu achten, dass ein für das erfindungsgemäße Verfahren geeignetes gewählt wird. Gewisse Formate können beispielsweise keine Farbe (z.B. STL-Formate) bzw. Farbe aber jedoch keine Textur (z.B. PLY-Format) speichern. Eine Lösung für dieses Problem bietet beispielsweise die Notation im OBJ-Format. Hierbei werden zusätzlich zu den 3D-Daten noch ein Material-file (*.mtl) und die eigentliche Texturkarte in einem Bildformat (beispielsweise *.JPEG, *.BMP oder auch *.PNG) benötigt. Die OBJ-Datei verweist (das Verweisen erfolgt in einem OBJ-Header der OBJ-Datei) auf das Material-file, welches wiederum auf eine oder mehrere Texturkarten verweist.

Die beispielhaft genannte OBJ-Notation hat den Vorteil, dass sie häufig zur Kommunikation zwischen einzelnen Unternehmen und Abteilungen, wie beispielsweise Zahnarzt und Dentallabor, verwendet werden und die Daten daher häufig bereits in diesen Formaten vorliegen. Theoretisch ist es sogar möglich, dass die dreidimensionale Oberflächengeometrie von einem Abdruck der Zähne gewonnen wurde, wenngleich hier eine größere Gefahr von Ungenauigkeiten besteht.

Sollte die Oberflächengeometrie in keiner auf Dreiecksfacetten basierenden Notation vorliegen, ist es bevorzugt, wenn die Oberflächengeometrie zunächst in eine entsprechende Notation umgewandelt wird. Dies kann beispielsweise unter Zuhilfenahme eines Marching-Cubes Algorithmus (ggf. in Kombination mit einer OpenMesh-Library) erfolgen. Selbstverständlich sind auch andere Methoden denkbar, um eine entsprechende Notation zu erhalten.

In einem nächsten Schritt wird dann eine Texturkarte zu der Oberflächengeometrie erzeugt. Diese Karte stellt eine möglichst winkeltreue (konforme) Abbildung der Modelloberfläche (der Menge aller Dreiecke, die die Modelloberfläche bilden) in die Ebene dar.

Einen möglichen Weg zum Erzeugen einer geeigneten Texturkarte zeigen Levy, Petitjean, Ray und Maillot in "Least squares conformal maps for automatic texture atlas generation" (Proceedings of the 29th Annual Conference on Computer Graphics and Interactive Techniques, SIGGRAPH '02, pages 362-371, New York, NY, USA, 2002). Ein wichtiger Bestandteil dieser Methode ist das Erkennen von Merkmalen (features), die als Unterteilungsgrenzen für einzelne Segmente innerhalb der Texturkarte geeignet sind. Dies ermöglicht nicht nur eine besonders naturgetreue Texturierung von dreidimensionalen Modellen im Allgemeinen, sondern macht die Methode auch besonders tauglich für das Texturieren von Oberflächengeometrien von Zähnen und intraoralen Strukturen im Speziellen, da derartige Oberflächengeometrien in der Regel anhand von ausgeprägten Winkeln an den Übergängen von Zahn zu Zahn und Zahn zu Zahnfleisch besonders günstig zu segmentieren sind. Analoges gilt selbstverständlich für Kronen, Implantate und sonstige intraorale Strukturen.

In einem nächsten Schritt wird dann die Oberfläche, welche beim Erzeugen der zur Verfügung gestellten Oberflächengeometrie erfasst wurde, wenigstens bereichsweise mit einer 2D-Farbkamera aufgenommen, wobei 2D-Farbaufnahmen erzeugt werden.

Die 2D-Farbaufnahmen werden im darauffolgenden Schritt in Relation zur Texturkarte gesetzt und die Texturkarte wird zusammen mit den 2D-Farbaufnahmen zu einer wenigstens bereichsweise farbig texturierten Oberflächengeometrie zusammengefügt. Dies kann bevorzugt parallel zur Aufnahme der 2D-Farbaufnahmen, beispielsweise synchron zu einem Videostream, erfolgen. Selbstverständlich kann die Berechnung auch im Nachhinein erfolgen, was allerdings die Benutzerfreundlichkeit schmälert.

Um eine Relation zur Texturkarte herzustellen, wird eine Methode aus dem Bereich des "Object Tracking" verwendet. Beim "Object Tracking" wird für Objekte, deren dreidimensionale Geometrie bekannt ist, die Lage dieser Objekte im Raum anhand von zweidimensionalen Aufnahmen bestimmt. Diese Technologie wird beispielsweise verwendet, um die Bewegung von Flug- und Raumfahrzeugen zu verfolgen. Eine weitere Anwendung dieser Technologie findet sich in der Film- und Tricktechnik, bei welcher die räumliche Lage eines Platzhalters - insbesondere in der Interaktion mit Umgebung und Personen - "getrackt", d.h. verfolgt, wird, um diesen später durch ein computergeneriertes Modell zu ersetzen.

Für das "Object Tracking" sind verschiedene Methoden bekannt. Im Folgenden soll lediglich kurz auf die Methoden eingegangen werden, die sich mit der äußeren Begrenzung bzw. Silhouette des Objektes befassen. Eine genauere Ausführung zu dieser Technologie und auch den Vorgängertechnologien kann beispielsweise Tjaden, Schwanecke, und Schömer, "Real-Time Monocular Segmentation and Pose Tracking of Multiple Objects" (14th European Conference on Computer Vision - ECCV 2016) entnommen werden.

Vereinfacht ausgedrückt wird dabei das dreidimensionale Modell so lange gedreht und verschoben, bis die äußeren Begrenzungen, welche in den 2D-Farbaufnahmen sichtbar sind, mit den äußeren Begrenzungen des ins Bild projizierten 3D-Modells übereinstimmen.

Erfindungsgemäß können, sobald diese Übereinstimmung gefunden wurde, Farbdaten aus den 2D-Farbaufnahmen extrahiert werden. Es ist allerdings bevorzugt, wenn Bereiche dann zur Texturierung ausgewählt werden, wenn mehr als 50%, bevorzugt mehr als 80%, von Oberflächennormalen der Dreiecksfacetten in einem Sichtbereich der 2D-Farbkamera im Wesentlichen parallel zu einer Sichtachse der 2D-FarbKamera stehen. Durch diese Auswahl wird eine besonders realitätsnahe Texturierung und Einfärbung der Oberflächengeometrie ermöglicht.

Weitere bevorzugte Ausführungsformen der Erfindung sind Gegenstand der übrigen Unteransprüche.

Nachstehend wird ein bevorzugtes Ausführungsbeispiel der Erfindung anhand der Zeichnung näher beschrieben. Es zeigt:

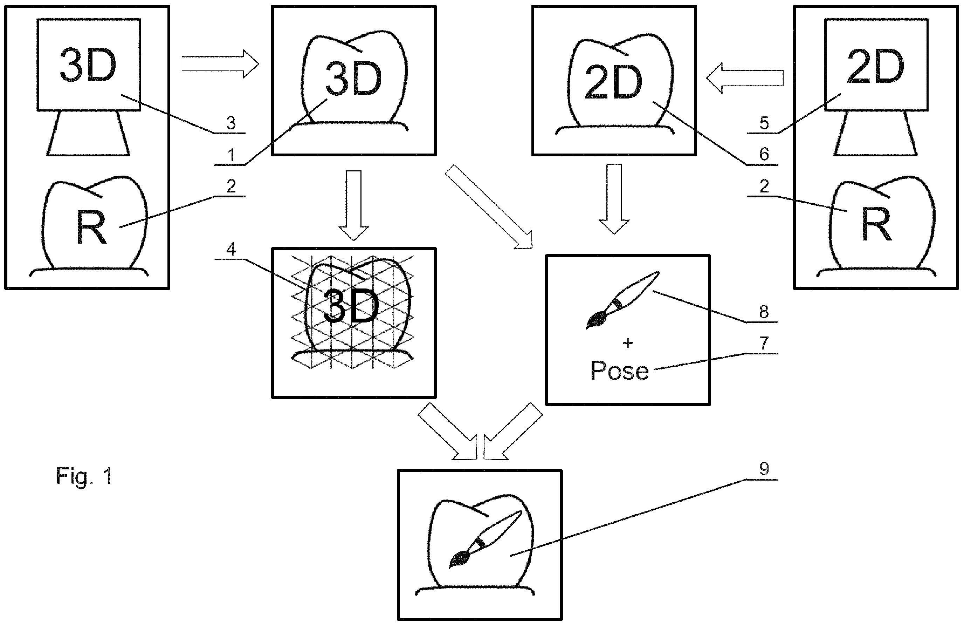

- Fig. 1: eine grobe schematische Darstellung des erfindungsgemäßen Verfahrens.
Zuerst wird mit einem 3D-Scanner 3 auf an sich bekannte Weise eine dreidimensionale Oberflächengeometrie 1 einer intraoralen Struktur 2 erfasst und für die weitere, erfindungsgemäße Verwendung zur Verfügung gestellt. Von der dreidimensionalen Oberflächengeometrie 1 wird dann eine Texturkarte 4 erstellt.

In weiterer Folge wird die intraorale Struktur 2, die beispielsweise ein Zahn sein kann, mit einer 2D-Farbkamera 5 aufgenommen. Dabei wird wenigstens eine 2D-Farbaufnahme 6 erzeugt.

Diese Reihenfolge ist bevorzugt, aber nicht zwingend, weil natürlich die Aufnahme mit der 2D-Farbkamera 5 auch bereits gemacht werden kann, bevor die Oberflächengeometrie zur Verfügung gestellt wird.

Aus der 2D-Farbaufnahme 6 werden dann mittels "Object Tracking" und der zur Verfügung gestellten, dreidimensionalen Oberflächengeometrie 1 wenigstens eine Pose 7 sowie Farbinformationen 8 extrahiert. Eine Pose 7 ist dabei die mathematische Transformation, die erforderlich ist, um das Modell, in diesem Fall also die dreidimensionale Oberflächengeometrie 1, so zu verschieben und zu rotieren, dass sie aus Sicht der 2D-Farbkamera 5 die gleiche Silhouette aufweist wie die mit der 2D-Farbkamera 5 aufgenommene intraorale Struktur 2. Die Pose kann also auch als die Kameraposition bzw. Blickrichtung der 2D-Farbkmaera relativ zur intraoralen Struktur 2 und zur dreidimensionalen Oberflächengeometrie 1 betrachtet werden.

Werden die Farbinformationen 8 zusammen mit der Pose 7 dann auf die Texturkarte, in welcher unter anderem die Oberflächennormalen der dreidimensionalen Oberflächengeometrie 1 hinterlegt sind, übertragen, kann aus den zusammengeführten Informationen eine wenigstens bereichsweise texturierte Oberflächengeometrie 9 erzeugt werden.

Werden hinreichend viele Bereiche der intraoralen Struktur 2 mit der 2D-Farbkamera 5 aufgenommen, kann ein vollständig texturiertes, dreidimensionales, virtuelles Modell der intraoralen Struktur erzeugt werden.

Die intraorale Struktur 2 ist dabei lediglich beispielhaft angeführt. Selbstverständlich lässt sich diese Technologie auch auf andere Objekte anwenden, zu denen Farbinformationen gewünscht sind. So können beispielsweise bemalte oder mit farbigen Elementen versehene Objekte, wie beispielsweise Sarkophage, digital konserviert werden. Auch hier bietet sich der Vorteil der einfachen Nachrüstbarkeit des Systems, da viele Museen bereits über 3D-Scanner verfügen, aber nicht über die Mittel, um einen 3D-Farbscanner zu erwerben. Unabhängig vom Besitz von 3D-Scannern können auch vorhandene, digitale Geometriedaten nachträglich z.B. mit Farbinformationen ergänzt werden. Mittels des erfindungsgemäßen Verfahrens kann beispielsweise auch eine normale Filmkamera verwendet werden, um vorhandenen, dreidimensionalen Modellen auch nachträglich die Textur des erfassten Objektes zu geben.

## Patentansprüche

1. Verfahren zum farbigen Texturieren von optisch erfassten, dreidimensionalen Oberflächengeometrien, **dadurch gekennzeichnet,**
- **dass** zunächst eine Oberflächengeometrie zur Verfügung gestellt wird,
- **dass** eine Texturkarte der Oberflächengeometrie erzeugt wird,
- **dass** die Oberfläche, welche beim Erzeugen der zur Verfügung gestellten Oberflächengeometrie erfasst wurde, wenigstens bereichsweise mit einer 2D-Farbkamera aufgenommen wird, wobei 2D-Farbaufnahmen erzeugt werden,
- **dass** die mit der 2D-Farbkamera aufgenommenen 2D-Farbaufnahmen in Relation zur Texturkarte gesetzt werden,
- und **dass** die Texturkarte zusammen mit den 2D-Farbaufnahmen zu einer wenigstens bereichsweise farbig texturierten Oberflächengeometrie zusammengefügt werden.

2. Verfahren nach Anspruch 1, **dadurch gekennzeichnet, dass** die Oberflächengeometrie in einer auf Dreiecksfacetten basierenden Notation zur Verfügung gestellt wird.

3. Verfahren nach Anspruch 2, **dadurch gekennzeichnet, dass** die Oberflächengeometrie in eine auf Dreiecksfacetten basierenden Notation umgewandelt wird, bevor die Oberflächengeometrie in der auf Dreiecksfacetten basierenden Notation zur Verfügung gestellt wird.

4. Verfahren nach einem der Ansprüche 1 bis 3, **dadurch gekennzeichnet, dass** das Erzeugen der 2D-Farbaufnahmen im Wesentlichen parallel zum in Relation Setzen und Zusammenführen erfolgt.

5. Verfahren nach einem der Ansprüche 1 bis 4, **dadurch gekennzeichnet, dass** die 2D-Farbaufnahmen durch Object Tracking in Relation zur Texturkarte gesetzt werden.

6. Verfahren nach einem der Ansprüche 2 bis 5, **dadurch gekennzeichnet, dass** mehr als 50 %, bevorzugt mehr als 80 %, von Oberflächennormalen der Dreiecksfacetten in einem Sichtbereich der 2D-Farbkamera im Wesentlichen parallel zu einer Sichtachse der 2D-Farbkamera stehen.
